Europäisches Patentamt

European Patent Office  (11) Numéro de publication: **0 284 532**

Office européen des brevets  **A1**

(12) **DEMANDE DE BREVET EUROPEEN**

(21) Numéro de dépôt: 88440026.8  (51) Int. Cl.⁴: **B 60 P 3/07**

(22) Date de dépôt: 25.03.88

(30) Priorité: 26.03.87 FR 8704358

(43) Date de publication de la demande:
28.09.88 Bulletin 88/39

(84) Etats contractants désignés:
AT BE DE ES GB IT NL

(71) Demandeur: **LOHR INDUSTRIE**
**29, rue du 14 Juillet**
**F-67980 Hangenbieten (FR)**

(72) Inventeur: **André, Jean-Luc**
**15, route du Vin**
**F-67310 Dangolsheim (FR)**

(74) Mandataire: **Metz, Paul**
**Cabinet METZ PATNI 95, rue de la Ganzau**
**F-67100 Strasbourg (FR)**

(54) **Cale pivotante autoverrouillable pour l'immobilisation d'un véhicule automobile sur un plan de chargement.**

㉝ Cale pivotante caractérisée en ce qu'elle se compose d'un bras (1) monté pivotant sur un corps coulissant (3) le long d'un profilé de guidage (4), d'un ensemble de rabattement vers une position d'autoverrouillage en pivotement du type à arc-boutement de bielles qui relie le bras (1) au corps coulissant (3) et d'un axe de pivotement (2) composite à extrémité inférieure usinée en came de blocage (31) coopérant avec la surface supérieure du profilé de guidage (4) en vue de l'immobilisation longitudinale du corps coulissant (3) et le freinage du bras en rotation, ledit axe de pivotement (2) étant relié mécaniquement au bras par une liaison élastique de torsion apportant une force de rappel en maintien dans la position de verrouillage.

Cette invention intéresse les industries fabriquant des convois porte-véhicules, routiers ou ferroviaires.

FIG. 1

EP 0 284 532 A1

## Description

Cale pivotante autoverrouillable pour l'immobilisation d'un véhicule automobile sur un plan de chargement.

La présente invention se rapporte à une cale pivotante ajustable et autoverrouillable pour l'immobilisation d'un véhicule automobile par ses roues sur un plan de chargement.

On connaît de nombreux dispositifs de calage et cales utilisés pour l'immobilisation d'un véhicule sur un convoi porte-voitures.

Il s'agit d'abord de cales escamotables à monter sur le chemin de roulement.

Ces cales présentent un plan d'appui relevable. Elles possèdent une semelle équipée d'une structure venant s'immobiliser par encastrement dans les perforations du chemin de roulement.

Bien que légères, ces cales s'avèrent d'un usage peu pratique car constituant, à plat, des saillies sur le chemin de roulement et des sources de bruit lors du roulage à vide.

Par ailleurs, il y a lieu de les manoeuvrer individuellement et, bien souvent, de les déplacer en raison de la disparité des chargements.

D'autres cales sont du type rabattable le long du chemin de roulement.

Malheureusement, pour les déplacer, il y a lieu de les décrocher pour les accrocher aux structures voisines espacées régulièrement.

La facilité de fixation à n'importe quel endroit le long du chemin de roulement n'est pas assurée.

Par ailleurs, les cales pivotantes nécessitent des structures d'appui et de blocage en rotation qui s'avèrent complexes et, par conséquent, apportent une plus-value trop importante pour la seule facilité d'usage présentée par le caractère pivotant de la cale.

Finalement, la solidité ne peut être garantie qu'avec des réalisations lourdes et difficiles à fabriquer.

La présente invention a pour but de remédier à ces inconvénients.

A cet effet, elle se rapporte à une cale pivotante autoverrouillable pour l'immobilisation d'un véhicule automobile par ses roues sur un plan de chargement caractérisée en ce qu'elle se compose d'un bras monté pivotant sur un corps coulissant le long d'un profilé de guidage, d'un ensemble de rabattement vers une position d'autoverrouillage en pivotement du type à arc-boutement de bielles qui relie le bras au corps coulissant et d'un axe de pivotement composite à extrémité inférieure usinée en came de blocage coopérant avec la surface supérieure du profilé de guidage en vue de l'immobilisation longitudinale du corps coulissant sur le profilé de guidage et le freinage du bras en rotation, ledit axe de pivotement étant relié mécaniquement au bras par une liaison élastique de torsion apportant une force de rappel en maintien dans la position de verrouillage.

Les avantages inhérents à la cale pivotante selon l'invention s'annoncent déjà nombreux. On peut en énumérer ainsi plusieurs ci-après, de façon non limitative :

. blocage longitudinal à n'importe quel endroit ;

. autoverrouillage à partir d'un certain pivotement angulaire ;

. il devient inutile de placer la cale précisément en un endroit pour assurer le calage ;

. la cale est montée mobile mais indissociable du profilé de bordure pour sa garantie contre perte et vol et la suppression des bruits au roulage à vide.

Les caractéristiques techniques et d'autres avantages sont consignés dans la description qui suit, effectuée à titre d'exemple non limitatif sur un mode de réalisation en référence aux dessins annexés dans lesquels :

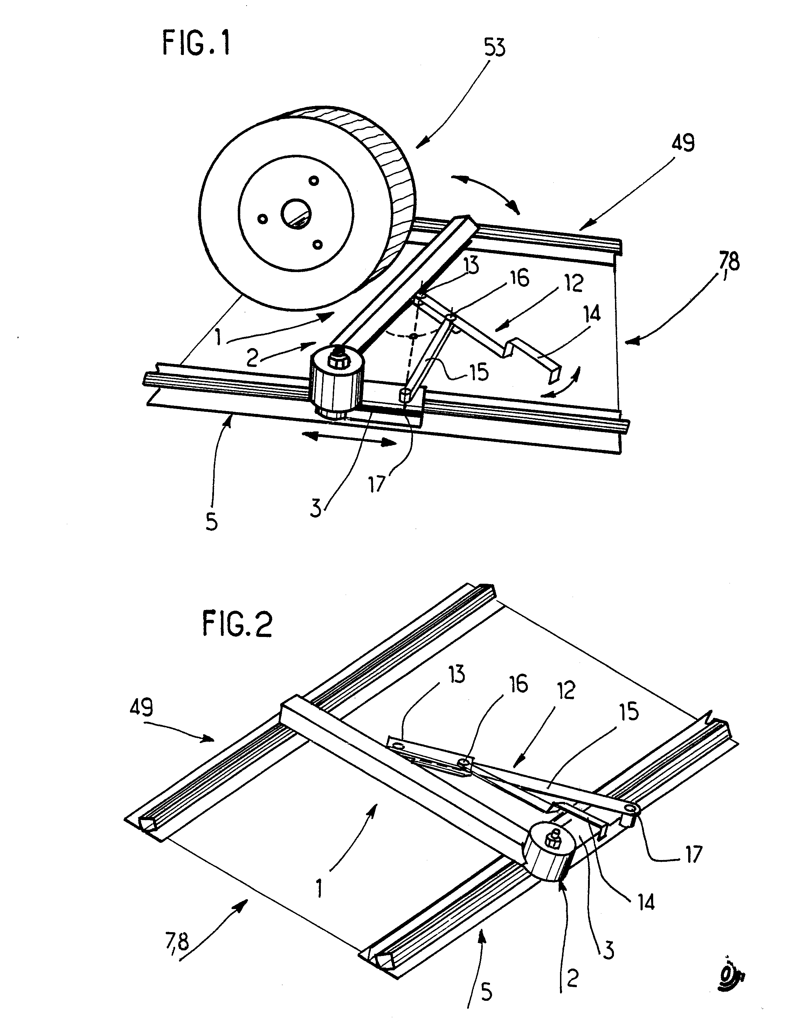

. la figure 1 est une vue générale en perspective de la cale pivotante selon l'invention en position intermédiaire sur un chemin de roulement devant une roue à immobiliser ;

. la figure 2 est une vue en perspective de la cale pivotante selon l'invention en position verrouillée à travers un chemin de roulement ;

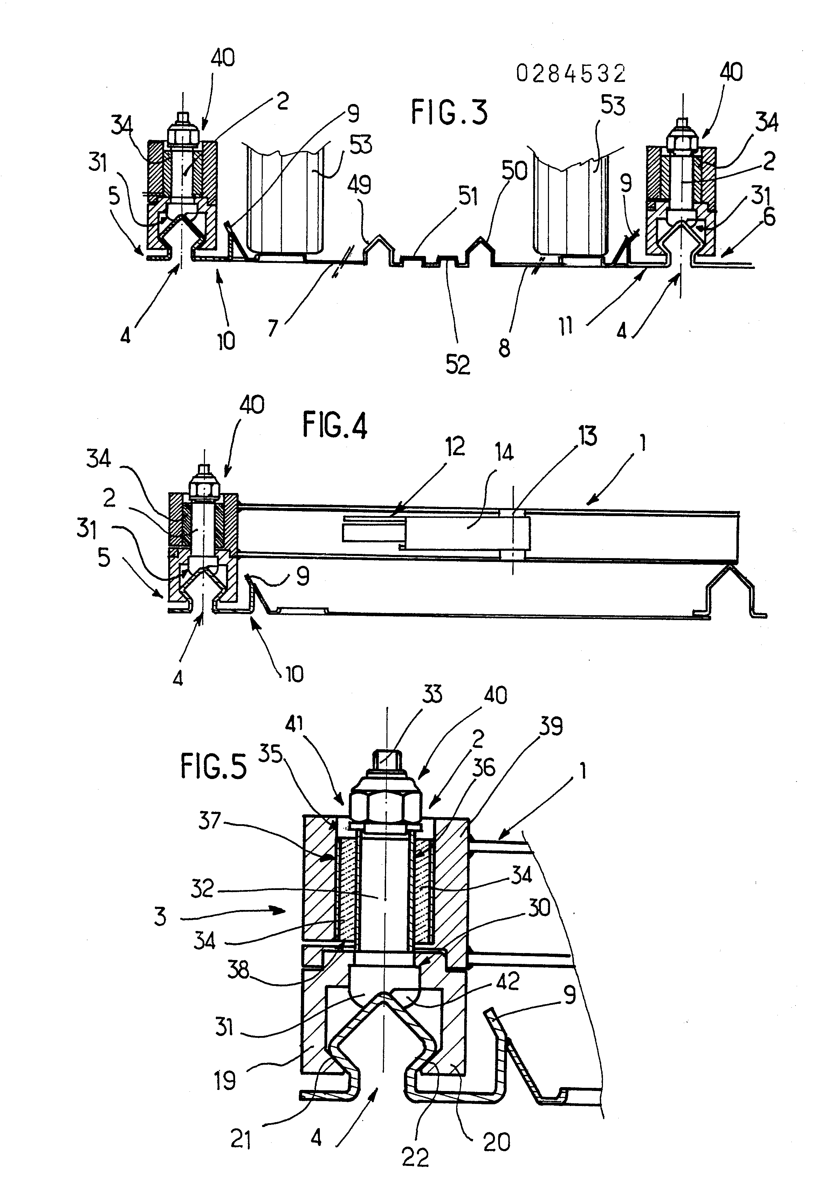

. la figure 3 est une vue en coupe verticale à travers les deux chemins de roulement ou lignes de roulage constituant le plan de chargement ;

. la figure 4 est une vue en coupe longitudinale de la cale pivotante selon l'invention, montée sur un chemin de roulement ;

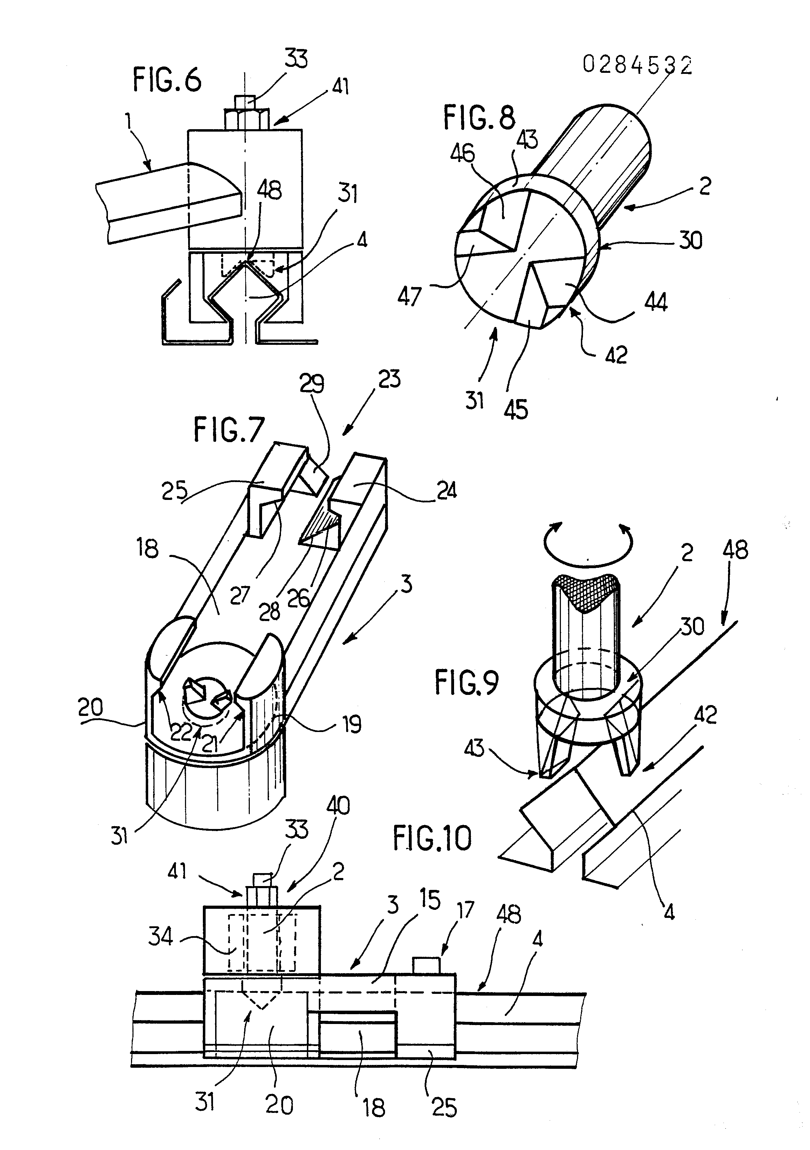

. la figure 5 est une vue de détail en coupe longitudinale de l'axe de pivotement et du corps coulissant sur lequel il est monté ;

. la figure 6 est une vue en élévation de l'axe de pivotement et de l'entrée du corps coulissant ;

. la figure 7 est une vue schématique des structures de guidage du corps coulissant monté sur le profilé de guidage ;

. la figure 8 est une vue en perspective illustrant le relief de la came de blocage équipant l'extrémité inférieure de l'axe de pivotement ;

. la figure 9 est une vue en perspective de l'extrémité de l'axe de pivotement au-dessus du profilé de guidage ;

. la figure 10 est une vue latérale du corps coulissant monté sur le profilé de guidage ;

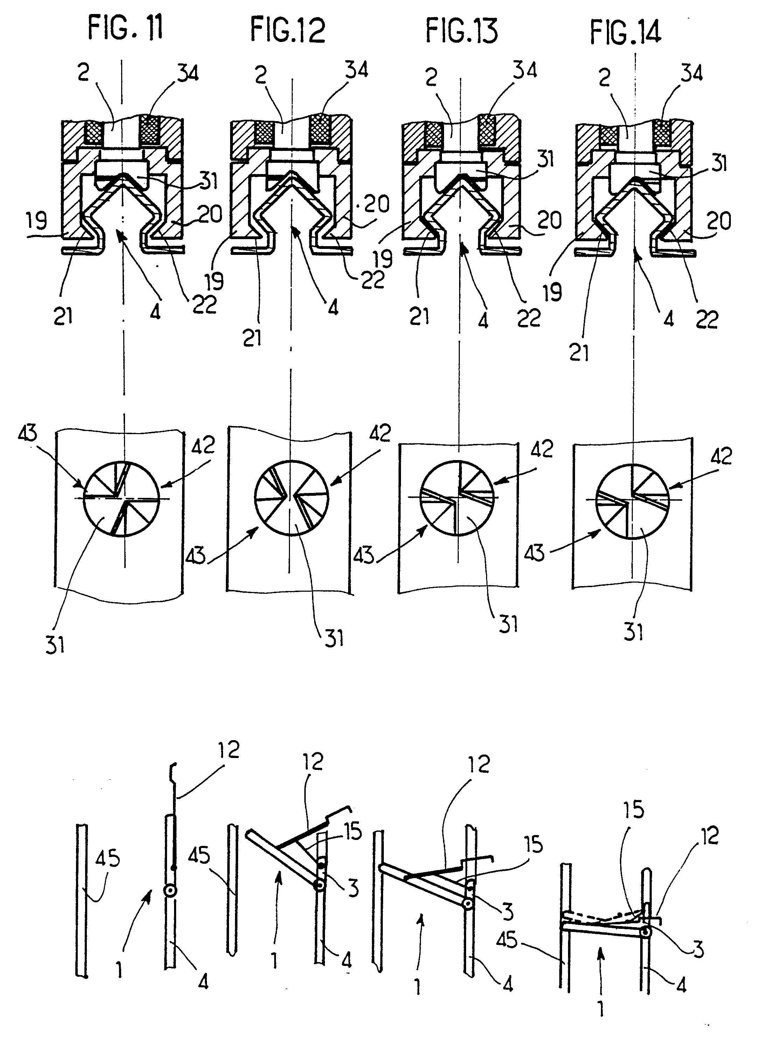

. les figures 11, 12, 13 et 14 sont des séries de vues schématiques en plan respectivement de la came de blocage vue en plan puis en coupe et des configurations correspondantes de la cale et de la position de l'extrémité de son bras sur le profilé de bordure opposé, dans les quatre positions suivantes :

- rabattue
- intermédiaire
- prise de blocage
- de calage.

L'idée générale inventive de la cale pivotante décrite ci-dessus consiste à monter un bras pivotant sur un corps coulissant le long d'un profilé de bordure, d'usiner l'extrémité de l'axe pivotant en came en vue du blocage du corps coulissant sur le profilé de bordure, le bras pivotant occupant une position de travail autoverrouillée par un arc-boutement de bielles.

La cale autoverrouillante selon l'invention se compose d'un bras pivotant 1 susceptible de mouvements de débattement angulaire autour d'un axe de pivotement 2 porté par un corps coulissant 3 le long d'un profilé de guidage tel que 4, de forme générale par exemple en losange, équipant les bords longitudinaux extérieurs 5 et 6 de chaque chemin de roulement ou ligne de roulage 7 ou 8.

Il est bien entendu que la forme de section du profilé de guidage 4 peut varier dans la limite des moyens équivalents c'est-à-dire dans la mesure où il permet le coulissement du corps 3 et son immobilisation longitudinale par blocage.

On peut envisager ainsi des formes rondes, semi-circulaires, triangulaires ou dérivées.

Dans la description ci-dessous, on choisira à titre d'exemple le profilé de section carrée.

Ce profilé, par exemple à section ouverte, se prolonge côté intérieur par un retour en aile verticale 9 servant de rebord de protection au profil de guidage contre les chocs provenant des roues du véhicule à transporter. L'ensemble constitue un profilé de bordure 10 ou 11 présent de chaque côté du plan de chargement.

Le bras pivotant 1 est actionné par un ensemble de rabattement constitué d'un levier de manoeuvre 12 articulé au bras par un axe 13 et rappelé sur le corps 3 par une liaison mécanique. Il se termine par une poignée 14.

Le rabattement de ce levier est limité angulairement par une biellette de verrouillage 15 articulée par un premier axe 16 au levier de manoeuvre 12 et par un deuxième axe 17 au corps coulissant 3 de manière à permettre le rabattement de dégagement total du bras dans une position parallèle au chemin de roulement et assurer l'autoverrouillage en position de calage.

Cet ensemble de rabattement est formé d'un arc-boutement de bielles réalisant la fonction d'autoverrouillage .

En effet, après franchissement de la position d'alignement des axes 13, 16 et 17, représentée en pointillés, l'ensemble de rabattement est en configuration d'autoverrouillage.

Les longueurs des bras de levier sont calculées et réalisées telles que la configuration d'autoverrouillage corresponde à la position de calage du bras pivotant, sensiblement perpendiculaire au chemin de roulement pour apporter une stabilité latérale au véhicule.

Le corps coulissant 3 se compose d'une platine 18 prolongée vers le bas à chacune de ses extrémités par des structures de guidage et d'enserrement en pièces usinées , par exemple, à l'une des extrémités, sous la forme de griffes 19 et 20, pour la partie située sous l'axe de pivotement 2. Ces griffes possèdent, chacune, en extrémité un plan incliné 21 et 22 apte à entrer en contact de blocage avec les faces adjacentes inférieures en regard du profilé de guidage 4 à section carrée comme représenté sur les figures 6 à 8.

L'extrémité opposée porte l'axe d'articulation 17 de la biellette de verrouillage 15. Elle est conformée en sous-face en éclisse 23 comportant deux pièces opposées 24 et 25 sous la forme de mâchoires fixes en rampes inclinées 26 et 27 faisant face à des plans inclinés opposés 28 et 29 destinés à maintenir le corps 3 sur le profilé de guidage 4 en étroit contact de coulissement sur toute la longueur dudit profilé.

L'axe de pivotement 2 est un axe épaulé monté sur le corps coulissant 3 en butée par son épaulement 30.

Comme représenté en détail sur la figure 5, l'axe 2 se termine en partie inférieure par une extrémité usinée en came de blocage 31 appelée à coopérer avec le dièdre supérieur du profilé de guidage 4 en vue de réaliser, conjointement avec la réaction de poussée de l'ensemble de rabattement, l'immobilisation par blocage du corps coulissant 3 sur ledit profilé de guidage 4 et la butée de l'axe 2 en rotation.

L'axe 2 se prolonge vers le haut par une portée cylindrique 32 terminée par une extrémité filetée 33.

Sur la portée 32 est enfilé un manchon de rappel 34 en caoutchouc ou matière analogue assurant une liaison mécanique élastique entre l'axe 2 et le bras pivotant 1. Ce manchon apporte une force de rappel élastique en torsion utilisée pour le maintien en autoverrouillage.

Le manchon de rappel 34 est enfermé dans une cage cylindrique extérieure 35 et monté par sa surface intérieure directement ou par l'intermédiaire d'une douille 36 sur la portée 32. La cage 35 est délimitée par une enveloppe extérieure 37 emmanchée à force dans une cavité cylindrique 38 traversant l'extrémité articulée 39 du bras pivotant.

Le manchon 34 est simplement emmanché directement ou par sa douille sur la portée 32 et contraint en déformation par un ensemble réglable de pression axiale 40 exercée par exemple par un écrou-rondelle 41 monté sur l'extrémité filetée 33.

On a ainsi créé un rattrapage de jeu et un réglage de la force de rappel élastique de torsion qui permet de modifier la position angulaire d'action et la valeur de la force d'autoverrouillage.

L'extrémité inférieure de l'axe de pivotement 2, usinée en forme de came 31, présente deux reliefs opposés symétriques, par exemple des saillies pyramidales 42 et 43 à plans de contact inclinés sécants 44, 45 et 46, 47 correspondant deux à deux en inclinaison avec les faces adjacentes du dièdre supérieur 48 du profilé de guidage. Ces plans sont convenablement espacés angulairement pour apporter, lorsque la came est en début de chevauchement sur le dièdre supérieur 48 du profilé de guidage 4, le décalage nécessaire au rapprochement puis contact des rampes et des plans inclinés de sous-face en regard c'est-à-dire ceux des griffes 19 et 20 et les flancs adjacents dudit profilé de guidage 4 en vue du blocage longitudinal du corps 3 sur celui-ci (figures 8 et 9).

Comme représenté sur la figure 3, le plan de chargement présente une structure symétrique comportant de chaque côté les profilés extérieurs de bordure 10 et 11 et, en zone centrale, deux profilés intérieurs de bordure 49 et 50 séparés par des nervures de rigidification 51 et 52.

Les profilés intérieurs de bordure 49 et 50 assurent le guidage des roues du véhicule mais aussi l'appui vertical pour l'extrémité libre du bras pivotant de la cale.

On expliquera maintenant en détail les différentes phases de fonctionnement de la cale pivotante selon l'invention.

A partir d'une position rabattue de dégagement, on procède au calage d'une roue 53 d'un des véhicules à transporter.

En position dégagée (figure 11), le corps 3 n'est pas immobilisé sur le profilé de guidage 4. On le fait coulisser librement le long du profilé de guidage jusque dans une position approximative de calage dans laquelle l'axe de pivotement 2 est amené au jugé à la hauteur du front avant du pneu.

On procède ensuite au pivotement du bras par action sur le levier 12 (figure 12). A partir d'un certain angle de pivotement par rapport à la position dégagée, une des saillies pyramidales formant le relief de la came de blocage 31 de l'extrémité de l'axe de pivotement 2 entre en contact avec le dièdre supérieur 48 du profilé de guidage 4 et provoque le blocage de l'axe de pivotement 2. Débute alors une phase de coincement qui se terminera par le blocage longitudinal du corps coulissant 3 sur le profilé de guidage 4, suivie immédiatement par l'autoverrouillage (figures 13 et 14). Ainsi, la poursuite du pivotement fait se rapprocher simultanément les plans inclinés 21 et 22 des sous-faces en regard du profilé de guidage. On rattrape ainsi dans un premier temps les jeux verticaux nécessaires au libre coulissement du corps 3 sur le profilé de guidage. La poursuite du pivotement provoque rapidement le blocage longitudinal complet du corps coulissant 3 en position longitudinale d'une part par augmentation de la force d'appui et de serrage apportée par le relief de blocage de la came 31 à l'extrémité inférieure de l'axe 2 et, d'autre part, par la réaction de poussée de l'ensemble de rabattement due à la force élastique de rappel amplifiée par la pression du pneu sur la cale. Cette réaction de poussée est une force latérale oblique qui provoque l'autocoincement du corps coulissant 3 sur le profilé de guidage 4.

En effet, la totalité de l'effort longitudinal de la roue sur la cale sera transmise au corps coulissant 3 par l'ensemble de rabattement pour provoquer l'autocoincement du corps 3 qui s'ajoute à la force initiale de pincement pour le blocage complet du corps coulissant 3.

On réalise ainsi un autoverrouillage à sécurité positive.

Le corps du manchon 34 en caoutchouc, solidaire du bras 1 et de l'axe 2, constituant une liaison élastique de transmission de mouvements entre ces éléments, la poursuite de la rotation, axe 2 immobilisé, doit être absorbée par la déformation élastique du manchon 34.

A partir d'un certain angle, lorsque le coincement de blocage longitudinal débute, la force élastique de retenue apporte un meilleur maintien du verrouillage car constituant un rappel élastique vers la position d'équilibre de verrouillage.

Arrivé au débattement angulaire correspondant à l'alignement des axes d'articulation 13, 16 et 17 de l'ensemble de rabattement, on dépasse le point d'équilibre de ce mécanisme (figure 14, position représentée en pointillés) au-delà duquel l'ensemble de rabattement bascule en position d'autoverrouillage (figure 14) et se trouve maintenu de façon stable dans cette position par la force de rappel élastique du manchon 34, point d'équilibre au-delà duquel le corps coulissant 3 est bloqué longitudinalement sur le profilé de guidage 4.

Cette contrainte résulte de la butée de blocage de la came 31 sur le dièdre supérieur 48 du profilé de guidage 4 à partir d'un débattement angulaire déterminé, résultant du décalage angulaire des faces des saillies de la came 31. En effet, l'axe 2 étant immobilisé, toute déviation angulaire supplémentaire doit être absorbée par la déformation élastique du manchon de rappel 34.

Ce rappel élastique améliore la stabilité du mécanisme de rabattement en position de verrouillage, car il constitue une force permanente de retour vers la position d'équilibre verrouillée.

Cette force de rappel élastique est réglable par l'ensemble de pression axiale 40, par exemple par l'ensemble écrou-rondelle 41.

Il est bien entendu que l'invention ne saurait se limiter aux seuls moyens décrits ci-dessus mais qu'au contraire, elle en embrasse toutes les variantes et modifications sans apport inventif.

**Revendications**

1. Cale pivotante autoverrouillable pour l'immobilisation d'un véhicule automobile sur un plan de chargement caractérisée en ce qu'elle se compose d'un bras (1) monté pivotant sur un corps coulissant (3) le long d'un profilé de guidage (4), d'un ensemble de rabattement vers une position d'autoverrouillage en pivotement du type à arc-boutement de bielles qui relie le bras (1) au corps coulissant (3) et d'un axe de pivotement (2) composite à extrémité inférieure usinée en came de blocage (31) coopérant avec la surface supérieure du profilé de guidage (4) en vue de l'immobilisation longitudinale du corps coulissant (3) sur le profilé de guidage et le freinage du bras en rotation, ledit axe de pivotement étant relié mécaniquement au bras par une liaison élastique de torsion apportant une force de rappel en maintien dans la position de verrouillage.

2. Cale pivotante selon la revendication 1 caractérisée en ce que la forme générale de section du profilé de guidage est un losange à dièdre supérieur (48) dirigé vers le haut.

3. Cale pivotante selon les revendications 1 et 2 caractérisée en ce que l'extrémité inférieure de l'axe de pivotement est usinée selon deux saillies symétriques opposées (42) et (43) à plans de contact inclinés (44, 45) et (46, 47) correspondant deux à deux en inclinaison avec les faces adjacentes du dièdre supérieur (48) du profilé de guidage (4).

4. Cale pivotante selon les revendications précédentes caractérisée en ce que la liaison élastique de torsion est un manchon en caoutchouc (34) enfermé dans une cage cylindrique annulaire (35) délimitée par une surface intérieure (36) et une enveloppe extérieure (37) emmanchée à force dans une cavité (38) cylindrique traversant l'extrémité articulée du bras pivotant et en ce que la surface intérieure est contrainte en défor mation par un ensemble réglable de pression axiale (40) monté sur l'extrémité filetée de l'axe de pivotement.

5. Cale pivotante selon les revendications 1, 2 et 3 caractérisée en ce que le corps coulissant (3) se compose d'une platine (18) et de deux extrémités sur lesquelles sont montés d'une part l'axe de pivotement (2) et d'autre part l'axe (17), pourvues chacune en sous-face de structures de guidage et d'enserrement destinées à maintenir le corps (3) sur le profilé de guidage (4) en étroit contact de coulissement et à réaliser le blocage longitudinal du corps coulissant sur ledit profilé de guidage.

6. Cale pivotante selon la revendication 5 caractérisée en ce que l'extrémité portant l'axe (17) est conformée en sous-face en éclisse (23) comportant deux pièces opposées (24) et (25) sous la forme de mâchoires fixes en rampes inclinées (26) et (27) faisant face à des plans inclinés opposés (28) et (29) pour le maintien de coulissement du corps (3) sur le profilé de guidage (4).

7. Cale pivotante selon la revendication 5 caractérisée en ce que l'extrémité portant l'axe de pivotement (2) possède en sous-face deux griffes (19) et (20) disposées, à l'état monté, en regard des faces adjacentes inférieures du profilé de guidage (4) pour entrer en contact de blocage avec celles-ci par la montée du corps coulissant (3).

8. Cale selon la revendication 1 caractérisée en ce que l'ensemble de rabattement en position d'autoverrouillage se compose d'un levier de manoeuvre (12) articulé au bras pivotant (1) par un axe (13), levier rappelé sur le corps coulissant (3) par une bielle de verrouillage (15) articulée par un premier axe (16) au levier et par un deuxième axe (17) au corps coulissant.

**FIG.1**

53

49

78

13

16

12

14

15

1

2

17

3

5

**FIG.2**

49

13

16

12

15

17

1

14

3

7,8

2

5

FIG.3

0284532

FIG.4

FIG.5

FIG.6

0284532

FIG.8

FIG.7

FIG.9

FIG.10

FIG. 11    FIG.12    FIG.13    FIG.14

0284532

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 419 198 (VEB WAGGONBAU NIESKY) * Revendication 1; figure 1 * --- | 1 | B 60 P 3/07 |
| X | FR-A-2 376 017 (VEB WAGGONBAU NIESKY) * Revendication 1; figure 1 * --- | 1 | |
| A | DE-B-1 017 928 (G. VOGT) * Revendication 1 * ----- | 1 | |

DOMAINES TECHNIQUES RECHERCHES (Int. Cl.4)

B 60 P
B 60 T

Le présent rapport a été établi pour toutes les revendications

| Lieu de la recherche | Date d'achèvement de la recherche | Examinateur |
|---|---|---|
| LA HAYE | 17-06-1988 | SCHMITTER J.M. |